Europäisches Patentamt

European Patent Office

Office européen des brevets

(19)

(11) EP 1 249 954 B1

(12) **FASCICULE DE BREVET EUROPEEN**

(45) Date de publication et mention
de la délivrance du brevet:
**02.06.2004 Bulletin 2004/23**

(51) Int Cl.⁷: **H04J 3/24**, H04Q 11/04

(21) Numéro de dépôt: **02290734.9**

(22) Date de dépôt: **22.03.2002**

(54) **Procédé de multiplexage et multiplexeur permettant l'optimisation de la gestion de la bande passante d'un canal de transmission numerique**

Multiplexer und Multiplexverfahren zur Optimierung der Bandbreitenverwaltung eines digitalen Übertragungskanals

Multiplexing system and method which allows the optimisation of the bandwith management of a digital transmission channel

(84) Etats contractants désignés:
**AT BE CH CY DE DK ES FI FR GB GR IE IT LI LU MC NL PT SE TR**

(30) Priorité: **27.03.2001 FR 0104115**

(43) Date de publication de la demande:
**16.10.2002 Bulletin 2002/42**

(73) Titulaire: **Thales**
**75008 Paris (FR)**

(72) Inventeurs:
• **LHermitte, Richard, Thales, Intellectual Property**
**94117 Arcueil Cedex (FR)**
• **Gourmelen, Eric, Thales, Intellectual Property**
**94117 Arcueil Cedex (FR)**

(74) Mandataire: **Lucas, Laurent Jacques**
**THALES Intellectual Property,**
**31-33 avenue Aristide Briand**
**94117 Arcueil Cedex (FR)**

(56) Documents cités:
**US-A- 5 126 999**      **US-A- 5 446 738**
**US-A- 5 539 738**

**Description**

L'invention concerne un procédé de multiplexage et multiplexeur permettant l'optimisation de la gestion de la bande passante d'un canal de transmission numérique, notamment pour les systèmes de diffusion de services.

Les diffuseurs de programmes de télévision numériques, de radio numériques et mêmes de données multimédia se partagent les canaux de transmission. Ces canaux sont divers. Il s'agit de transmettre soit sur le câble, soit par satellite, soit par voie herzienne et même en utilisant le réseau Internet.

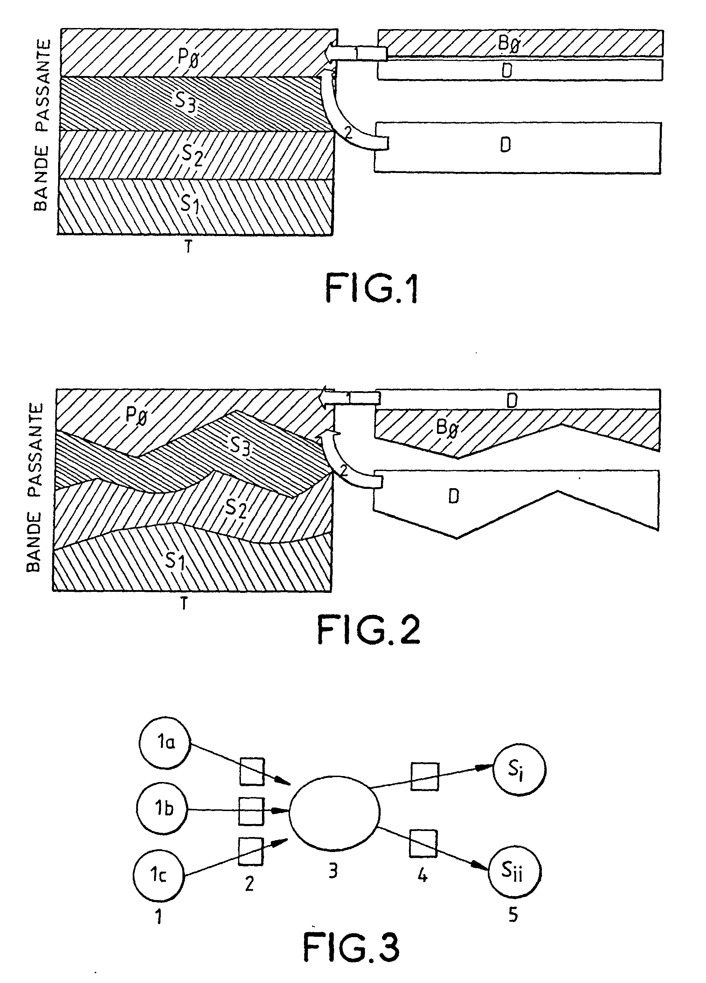

Les multiplexages des services audio visuels ($S_1$, $S_2$, $S_3$) à débits constants comme le montre la figure 1, et à débits variables comme le montre la figure 2 sont connus. Une telle solution est décrite dans le brevet américain US 5 446 738, déposé par la société 'Electronics and Telecommunications Research Institute, Daejeon, Rep. of Korea, le 28 Décembre 1993. La bande passante, quel que soit le réseau utilisé pour diffuser son service, est limitée et chère. Le multiplexage à débits variables permet déjà une première optimisation de la gestion de la bande passante. Mais quel que soit le type de multiplexage, les algorithmes de multiplexage ne savent pas travailler sans paquets de bourrage $P_\varnothing$. Ils permettent de conserver une marge de bande passante pour palier les pertes éventuelles.

Une idée pour palier la perte de bande passante liée à l'obligation d'utiliser les paquets de bourrage $P_\varnothing$ dans les algorithmes de multiplexage actuels est de remplacer les paquets de bourrage $P_\varnothing$ après le multiplexage par des données D comme cela est montré sur les figures 1 et 2. Les données D remplacent les paquets de bourrage $P_\varnothing$ soit en partie (flèche 1) laissant une partie $B_\varnothing$ de la bande passante définitivement non utilisée, soit en totalité (flèche 2). Le problème est alors que le diffuseur n'est pas maître de ce flux de données car il dépend des services multiplexés. Donc suivant le type de données transmises à la place des paquets de bourrage, si le débit est trop lent, l'utilisateur se plaindra de la lenteur du service et si le débit est trop rapide, c'est le décodeur qui ne pourra plus gérer le flux de données entrant.

La présente invention propose une nouvelle approche pour l'optimisation de la gestion de la bande passante du canal de transmission numérique. Cette nouvelle approche a l'avantage d'être plus simple à mettre en oeuvre que les multiplexeurs existants. L'invention a pour objet un procédé de multiplexage de M services (M entier > 1) permettant de transmettre des paquets de données de taille $T_p$ prédéterminée à débit de sortie dont le débit maximal de sortie $D_{S\,max}$ est prédéterminé caractérisé en ce qu'il comporte le stockage des données entrantes de chaque service dans une zone tampon associée, la présentation en sortie d'un paquet de données formées par tout ou partie des données présentes dans la zone tampon dont le remplissage est supérieur ou égal à la taille $T_p$ d'un paquet et le retrait des données présentées en sortie de ladite zone tampon.

L'invention propose aussi un multiplexeur à M entrées (M entier > 1) et une sortie permettant de transmettre des paquets de données de taille $T_p$ prédéterminée à débit de sortie dont le débit maximal de sortie $D_{S\,max}$ est prédéterminé caractérisé en ce qu'il comporte M zones tampons pour le stockage des données entrantes de chacun des M services entrants, chaque zone tampon étant reliée à une entrée et un dispositif d'élection reliant la zone tampon dont le remplissage est supérieur à la taille $T_p$ d'un paquet à la sortie, permettant ainsi la présentation en sortie d'un paquet de données formées par tout ou partie des données présentes dans ladite zone tampon et le retrait des données présentées en sortie de ladite zone tampon.

Un autre objet de l'invention est une chaîne d'émission numérique de services de divers types sur différents types de réseaux de données synchrones et/ou asynchrones comportant:

- M entrées dont les fonctions sont l'acquisition des données, la transformation en paquets de taille fixe adapté au protocole de diffusion,
- M buffers dans lesquels les M entrées viennent stocker lesdits paquets,
- Un multiplexeur dont les M entrées sont reliées au M buffers ,
- J buffers reliées aux J sorties du multiplexeur permettant de gérer les données synchrones et asynchrones,
- J sorties dont les fonctions sont l'acquisition des données des J buffers , l'adaptation au format du canal de transmission et la diffusion.

Les caractéristiques et avantages de l'invention apparaîtront plus clairement à la lecture de la description, faite à titre d'exemple, et des figures s'y rapportant qui représentent :

- Figure 1, la gestion de la bande passante avec un débit à taux constant selon l'état de l'art,
- Figure 2, la gestion de la bande passante avec un débit à taux variable selon l'état de l'art,
- Figure 3, une partie de la chaîne d'émission comportant le multiplexeur selon l'invention,
- Figure 4, un exemple de représentation schématique du multiplexeur selon l'invention,
- Figure 5, la gestion de la bande passante en utilisant le multiplexage selon l'invention.

La figure 3 montre qu'un multiplexeur 3 gère des paquets de différents types de données en entrée. Ces données peuvent être composées de données vidéo, audio ou audio-visuelles diffusées soit en direct soit en différé, de fichiers ou même de données provenant de réseau du type Internet. Ces paquets de données sont de taille fixe. Dans l'exemple de la figure 3, une entrée 1a reçoit des données diffusées en direct, une entrée 1b des fichiers et une entrée 1 c est reliée à un réseau.

Le multiplexeur 3 génère une concaténation de ces paquets suivant les débits d'arrivée réels ou les débits d'arrivée désirés des données. Les échanges de données entre les entrées 1/sorties 5 et le multiplexeur 3 se font à l'aide de zones tampons 2 et 4 appelées buffer en anglais. Les buffers 4 sont de deux types: flip/flop pour les données synchrones et FIFO pour les données asynchrones. Dans l'exemple de la figure 3, la sortie $5_i$ permet la diffusion des données multiplexées en direct et la sortie $5_{ii}$ distribue les données sur un réseau, tel que Internet, ATM...par exemple.

Les tâches d'une entrée 1 se décomposent en acquisition des données, transformation en paquets de taille fixe adapté au protocole et stockage dans un buffer 2 à destination du multiplexeur 3. Les tâches d'une sortie se décomposent en acquisition des données d'un buffer 4 calculées par le multiplexeur, l'adaptation au format du canal de transmission et la diffusion.

Lorsque le multiplexeur 3 a plusieurs sorties ($S_i$, $S_{ii}$) comme cela est représenté à la figure 3, tous les paquets du noyau de multiplexage sont transmis à l'ensemble des sorties, en l'occurrence aux deux sorties du multiplexeur 3 de la figure 3. Ensuite, sur chaque sortie, les paquets peuvent être filtrer selon les besoins pour transmettre uniquement certains paquets. Par exemple, le filtrage peut être effectué pour ne diffuser à partir de l'une des sorties que des données synchrones et de l'autre que des données asynchrones...

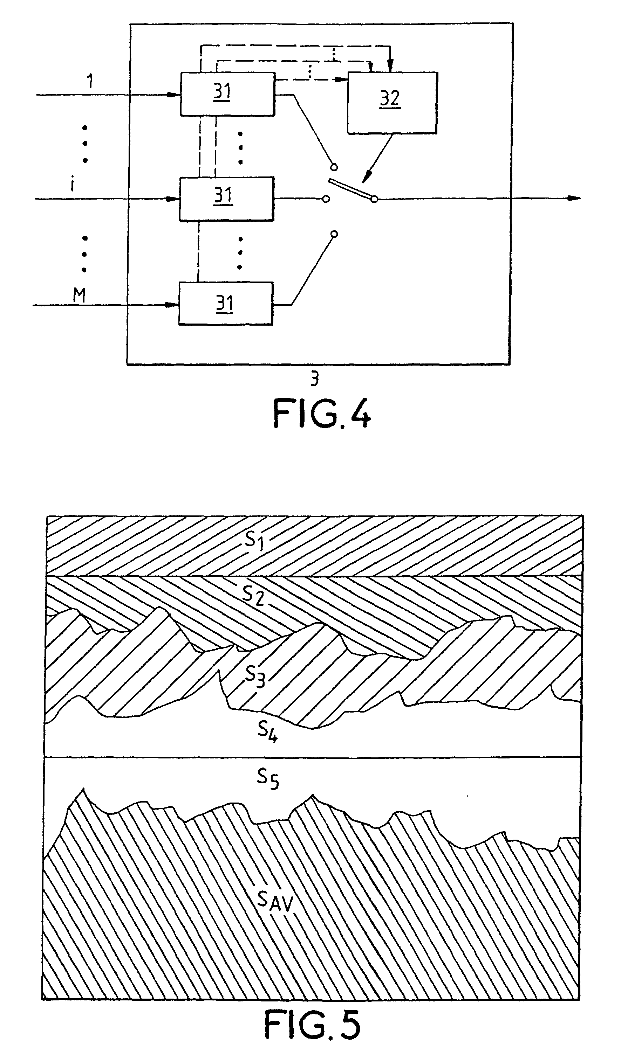

Comme le montre l'exemple de représentation schématique du multiplexeur 3 proposé par la figure 4, le multiplexeur 3 comporte des buffers 31 et un dispositif d'élection 32 qui contrôle le remplissage des buffers 31 avec des données à partir des entrées et la transmission de ces données en sortie.

Les buffers 2 sont des buffers réels. Ils se remplissent en fonction de l'arrivée des données (dans le cas du direct) ou par bloc complet dans le cas de fichiers.

Les buffers 31 peuvent être virtuels, c'est à dire ne pas avoir d'existence réelle. Ce sont des tableaux de valeurs. Ils ont un niveau de remplissage prédéterminé pour une entrée donnée (par exemple, fixée par l'utilisateur). Si la valeur de remplissage était le niveau réel du buffer 2, l'efficacité serait très diminuée (en particulier dans le cas de données asynchrones). Les niveaux de remplissage passeraient de plein à vide et, en sortie du multiplexage, le niveau du débit serait donc en "dent de scie" très prononcé. Dans le cas de la transmission d'un fichier, si les paquets étaient lus directement dans un buffer réel 2, au lieu de les prendre bloc par bloc dans un buffer 31, les performances globales du système s'en ressentiraient.

L'avantage d'utilisation des buffers 31 est de décorréler le traitement des données d'entrée du multiplexage à proprement parler. Cela est d'autant plus facile si les buffers 31 sont virtuels.

Le multiplexeur 3 possède M entrées sur lesquelles sont présentées M services. Le débit des données pour chaque entrée est $\{D_E[i](t)\}_{1 \le i \le M}$ et le débit maximum demandé par les canaux de transmission de toutes les sorties du multiplexeur 3 sont $D_{S\,max}$. Le temps paquet $t_p$ est alors égal à $T_p/ D_{Smax}$ où $T_p$ est la taille d'un paquet. $B_E[i](t)$ représente l'état de remplissage du buffer 31 de l'entrée i. Alors le principe général du remplissage des buffers 31 est le suivant :

- à l'instant t = 0, $\quad \forall i \in [1,M] \quad B_E[i](O) = 0$, et
- à l'instant $t_{N+1} = t_N + t_p$, $\quad \forall i \in [1, M] \quad B_E[i](t_{N+1}) = B_E[i](t_N) + D_E[i](t_{N+1}) \cdot t_p$. Et le principe général de l'élection d'un buffer 31 vers la sortie du multiplexeur 3 mis en oeuvre par le dispositif d'élection 31 est le suivant:

- si $\exists i\, I\, B_E[i](t_{N+1}) \ge T_p$ alors le paquet du buffer 31 sur l'entrée i est présenté en sortie et $B_E[i](t_{N+1}) = B_E[i]t(_{N+1}) - T_p$,

- sinon un paquet de bourrage est présenté en sortie.

Ce procédé de multiplexage comportant le remplissage de buffers d'entrée 31 internes au multiplexeur et l'élection de celui d'entre eux qui a un taux de remplissage supérieur ou égal à la taille d'un paquet pour transmettre au moins une partie des données qu'il stocke à la sortie du multiplexeur 3 est plus simple à mettre en oeuvre que ceux proposés dans l'état de l'art. Les paquets de bourrage ne sont pas présentés en sortie sauf dans le cas où aucun buffer n'est suffisamment rempli.

Étendons ce principe, pour non plus considérer un seul état de remplissage par buffers 31 mais deux états de remplissage $B_{E\,min}[i](t)$ et $B_{Emax}[i](t)$ correspondants respectivement au débits de consignes minimum et maximum $D_{Emin}[i](t)$ et $D_{Emax}[i](t)$. Alors,

- à l'instant t = 0, $\forall i \in [1, M]$
  $B_{Emin}[i](0) = 0$,
  $B_{Emax}[i](0) = 0$, et

- à l'instant $t_{N+1} = t_N + t_p$, $\forall i \in [1,M]$

$$B_{E\min}[i](t_{N+1}) = B_{E\min}[i](t_N) + D_{E\min}[i](t_{N+1}) \cdot t_p$$
$$\text{et } B_{E\max}[i](t_{N+1}) = B_{E\max}[i](t_N) + D_{E\max}[i](t_{N+1}) \cdot t_p.$$

Le dispositif d'élection 32 peut choisir de transmettre des données provenant du buffer 31 de l'entrée si son état de remplissage minimum ou son état de remplissage maximum est supérieur ou égal à la taille d'un paquet comme le montre le procédé suivant:

1) Si $\exists i / B_{E\min}[i](t_{N+1}) \geq T_p$, alors le paquet provenant du buffer 31 de l'entrée n°$i$ est présenté en sortie,

$$B_{E\min}[i](t_{N+1}) = B_{E\min}[i](t_{N+1}) - T_p \text{ et } B_{E\max}[i](t_{N+1}) - B_{Elin}[i](t_{N+1}),$$

2) Sinon, si $\exists i / B_{E\max}[i](t_{N+1}) \geq T_p$, alors le paquet provenant du buffer 31 de l'entrée n°$i$ est présenté en sortie,

$$B_{E\min}[i](t_{N+1}) = B_{E\min}[i](t_{N+1}) - T_p \text{ et } B_{E\max}[i](t_{N+1}) = B_{Elax}[i](t_{N+1}) - T_p,$$

3) Sinon un paquet de bourrage est présenté en sortie.

Les débits de consignes peuvent être vus comme un débit garanti pour le débit minimum et un débit au mieux pour le débit maximum.

Si le débit minimum d'un service i est égal au débit maximum de ce même service i, alors le service i est diffusé avec un débit fixe et garanti. Si le débit minimum du service i est fixé à zéro et le débit maximum de ce même service i au débit maximum de sortie, le mode de diffusion du service i est alors dit "opportuniste", c'est à dire que le service à un débit fluctuant correspondant à la bande passante laissée libre.

Du fait de la simplicité du procédé mis en oeuvre, les buffers 31 peuvent être virtuels ainsi que le dispositif d'élection 32.

Dans le procédé utilisant le principe général de remplissage et d'élection ainsi que dans celui mettant en oeuvre les débits de consigne, si les buffers 31 de deux entrées i et j sont élus, le conflit d'élection peut être régler en définissant un ordre de priorité des buffers 31 ou suivant le type de service stocké dans les buffers et/ou le type de débit (opportuniste, variable garanti, constant) et/ ou le type de données (audio, vidéo...) et/ou le diffuseur...

La figure 5 montre un exemple de la gestion d'un canal par le multiplexeur 3 . Elle représente l'utilisation de la bande passante complète par six services différents. La bande passante est représentée en ordonnées et le temps en abscisses. Le service 1 a un débit constant c'est à dire que le débit minimum est égal au débit maximum pour ce service dans le procédé mis en oeuvre par le multiplexeur 3. Les services 2 à 4 ont des débits minimum différents de leurs débits maximum. Leurs débits minimum sont différents de zéro. Et leurs débits maximum sont différents du débit de sortie maximum, cela permet d'avoir une gestion variable de la bande passante avec garanti de pouvoir transmettre. Le service $S_{AV}$ comporte des données audio/vidéo diffusée en direct avec un débit variable non contrôlable.. Le service 5 a un débit purement variable du fait que son débit minimum a été fixé à zéro et son débit maximum a été fixé égal au débit de sortie maximum $D_{S\,max}$. Ce service remplit ainsi ce qui reste de la bande passante sans que cela lui nuise.

Les débits minimum et maximum sont fixés service par service soit de façon prédéterminée par les producteurs des services ou les diffuseurs, soit en fonction du type de données que comporte ces services (services en direct ou en différé, types de données: audio, vidéo, fichiers, données multimédia). Certains services ne peuvent être diffusés qu'à débit constant sous peine de voir celui-ci se dégrader. Pour d'autres, un débit de consigne minimum est nécessaire car la lenteur du service engendre une gêne à l'utilisation. Pour certains services, si celui-ci est reçu à un débit trop élevé le décodeur en réception n'est pas capable de suivre. Et, pour des services tel que le téléchargement de fichiers en arrière plan... le débit de diffusion importe peu, c'est donc le type de service qui peut venir utiliser les bits restant de la bande passante afin d'en optimiser la gestion.

Ainsi, l'utilisation maximale du débit disponible sur le canal de transmission est garantie, la gestion simultanée de flux de données synchrones et asynchrones, la gestion d'entrées et de sortie hétérogènes et la gestion simultanée de contraintes de débits.

Le procédé de multiplexage selon l'invention se différencie des multiplexeurs classiques par les points suivants:

- L'utilisation de buffers 31 permettant de dissocier le stockage et l'arrivée des données du multiplexage;
- La simplicité de l'algorithme d'élection avec le parcours d'un tableau de valeur;
- Le multi-format des entrées/sorties (plusieurs entrées et plusieurs sorties, les données de chaque entrée peuvent être de types différents, de même que les données de chaque sortie peuvent être de types différents) ;

- La gestion optimisée du mode opportuniste.


**Revendications**

1. Procédé de multiplexage de M services, M entier > 1, permettant de transmettre des paquets de données de taille Tp prédéterminée à débit de sortie dont le débit maximal de sortie $D_{S\,max}$ est prédéterminé **caractérisé en ce qu'**il comporte le stockage des données entrantes de chaque service dans une zone tampon associée, la présentation en sortie d'un paquet de données formées par tout ou partie des données présentes dans la zone tampon dont le remplissage est supérieur ou égal à la taille $T_p$ d'un paquet et le retrait des données présentées en sortie de ladite zone tampon.

2. Procédé de multiplexage selon la revendication 1 **caractérisé en ce que** si aucune zone tampon n'a un remplissage supérieur ou égal à la taille $T_p$ d'un paquet, un paquet de bourrage est présenté en sortie.

3. Procédé de multiplexage selon l'une des revendications précédentes **caractérisé en ce que** si plusieurs zones tampon présentent un remplissage supérieur ou égal à la taille $T_p$ d'un paquet, la zone tampon qui sera débitée la première d'au moins une partie de ses données dépend soit de sa priorité, soit de la priorité du service stocké, soit du type de données stockées.

4. Procédé de multiplexage selon l'une des revendications précédentes **caractérisé en ce que** le remplissage des zones tampon vérifie l'équation suivante: $\forall i \in [1, M] B_E[i](t_{N+1}) = B_E[i](t_N) + D_E[i](T_{N+1}) \cdot t_p$ où $B_E[i](t)$ représente le remplissage de la zone tampon de l'entrée $i$ à l'instant $t$, $D_E[i](t)$ représente le débit des données pour l'entrée $i$ à l'instant $t$, l'instant $t_{N+1} = t_N + t_p$ avec $t_p = T_p / D_{S\,max}$ et sachant qu'à l'instant $t=0$, les M zones tampons sont vides et **en ce que** la transmission des données en sortie vérifie l'équation suivante: si $\exists i / B_E[i](t_{N+1}) \geq T_p$ , alors le paquet de l'entrée n°$i$ est présenté en sortie et $B_E[i](t_{N+1}) = B_E[i](t_{N+1})-T_p$.

5. Procédé de multiplexage selon l'une des revendications précédentes **caractérisé en ce que** si le service de l'entrée $i$ à un débit minimum $D_{E\,min}[i](t)$ et un débit maximum $D_{E\,max}[i](t)$, et si $B_{E\,min}[i](t)$ et $B_{Emax}[i](t)$ représentent respectivement le remplissage minimal et maximal de la zone tampon de l'entrée $i$ à l'instant $t$ sachant que ce remplissage est nul à l'instant t=0 et que l'instant $t_{N+1} = t_N + t_p$ avec $t_p = T_p / D_{S\,max}$, le remplissage des zones tampons vérifie les équations suivantes:

$$\forall i \in [1,M] B_{E\min}[i](t_{N+1}) = B_{E\min}[i](t_N) + D_{E\min}[i](t_{N+1}) \cdot t_p$$

$$\text{et } B_{E\max}[i](t_{N+1}) = B_{E\max}[i](t_N) + D_{E\max}[i](t_{N+1}) \cdot t_p$$

et la transmission de sonnées en sortie vérifie les équations suivantes:
si $\exists i / B_{E\min}[i](t_{N+1}) \geq T_p$ , alors le paquet de l'entrée n°$i$ est présenté en sortie, $B_{E\min}[i](t_{N+1}) = B_{E\min}[i](t_{N+1})-T_p$ et $B_{E\max}[i](t_{N+1}) = B_{Elin}[i](t_{N+1})$, sinon si $\exists i / B_{E\max}[i](t_{N+1}) \geq T_p$, alors le paquet de l'entrée n°$i$ est présenté en sortie, $B_{E\min}[i](t_{N+1}) = B_{E\min}[i](t_{N+1})-T_p$ et $B_{E\,max}[i](t_{N+1}) = B_{Elax}[i](t_{N+1})- T_p$, sinon un paquet de bourrage est présenté en sortie.

6. Procédé de multiplexage selon l'une des revendications précédentes **caractérisé en ce que** tout ou partie des services sont présentés en sortie avec des débits constants et/ou variables avec ou sans consigne minimale et/ou maximale.

7. Multiplexeur à M entrées, M entier > 1, et une sortie permettant de transmettre des paquets de données de taille $T_p$ prédéterminée à débit de sortie dont le débit maximal de sortie $D_{Smax}$ est prédéterminé **caractérisé en ce qu'**il comporte M zones tampons (31) pour le stockage des données entrantes de chacun des M services entrants, chaque zone tampon (31) étant reliée à une entrée et un dispositif d'élection (32) reliant la zone tampon (31) dont le remplissage est supérieur à la taille $T_p$ d'un paquet à la sortie, permettant ainsi la présentation en sortie d'un paquet de données formées par tout ou partie des données présentes dans ladite zone tampon et le retrait des données présentées en sortie de ladite zone tampon.

**8.** Multiplexeur selon la revendication 7 **caractérisé en ce que** les zones tampons (31) et/ou le dispositif d'élection (32) sont virtuels.

**9.** Multiplexeur selon la revendication 7 **caractérisé en ce qu'**il met en oeuvre le procédé de multiplexage selon l'une des revendications 2 à 6.

**10.** Chaîne d'émission numérique de services de divers types sur différents types de réseaux de données synchrones et/ou asynchrones comportant:

- M entrées (1) dont les fonctions sont l'acquisition des données, la transformation en paquets de taille fixe adapté au protocole de diffusion,
- M buffers (2) dans lesquels les M entrées (1) viennent stocker lesdits paquets,
- Un multiplexeur (3) selon l'une des revendications 7 et 8 dont les M entrées sont reliées au M buffers (2),
- J buffers (4) reliées aux J sorties du multiplexeur (3) permettant de gérer les données synchrones et asynchrones,
- J sorties (5) dont les fonctions sont l'acquisition des données des J buffers (4), l'adaptation au format du canal de transmission et la diffusion.

**11.** Système de diffusion de services de divers types sur différents types de réseaux de données synchrones et/ou asynchrones comportant dans sa chaîne d'émission le multiplexeur selon l'une des revendications 7 et 8.

**Patentansprüche**

**1.** Verfahren zum Multiplexieren von M Diensten, wobei M eine ganze Zahl > 1 ist, das es ermöglicht, Datenpakete einer vorbestimmten Größe *Tp* mit Ausgangsdurchsatz zu übertragen, wobei der maximale Ausgangsdurchsatz $D_{Smax}$ vorbestimmt ist, **dadurch gekennzeichnet, dass** es das Speichern der von jedem Dienst eingehenden Daten in einer zugeordneten Pufferzone, die Lieferung eines Pakets von Daten an den Ausgang, die von allen oder einem Teil der in der Pufferzone vorhandenen Daten gebildet werden, wenn die Füllung der Pufferzone mindestens gleich der Größe *Tp* eines Pakets ist, und die Ausgabe der am Ausgang der Pufferzone vorliegenden Daten aufweist.

**2.** Multiplexierverfahren nach Anspruch 1, **dadurch gekennzeichnet, dass**, wenn keine Pufferzone eine Füllung hat, die mindestens gleich der Größe *Tp* eines Pakets ist, ein Füllpaket am Ausgang geliefert wird.

**3.** Multiplexierverfahren nach einem der vorhergehenden Ansprüche, **dadurch gekennzeichnet, dass**, wenn mehrere Pufferzonen eine Füllung aufweisen, die mindestens gleich der Größe *Tp* eines Pakets ist, die Pufferzone, aus der zuerst mindestens ein Teil ihrer Daten ausgegeben wird, entweder von ihrer Priorität oder der Priorität des gespeicherten Dienstes oder von der Art der gespeicherten Daten abhängt.

**4.** Multiplexierverfahren nach einem der vorhergehenden Ansprüche, **dadurch gekennzeichnet, dass** das Füllen der Pufferzonen die folgende Gleichung erfüllt: $\forall i \in [1, M] B_E[i](t_{N+1})=B_E[i](t_N)+D_E[i](t_{N+1})\cdot t_p$, wobei $B_E[i](t)$ das Füllen der Pufferzone des Eingangs *i* im Zeitpunkt t darstellt, $D_E[i](t)$ den Durchsatz der Daten für den Eingang *i* im Zeitpunkt *t* darstellt, der Zeitpunkt $t_{N+1}=t_N+t_p$ mit $t_p=T_p/D_{Smax}$, und bekannt ist, dass im Zeitpunkt t=O die M Pufferzonen leer sind, und dass die Datenübertragung am Ausgang die folgende Gleichung erfüllt: wenn $\exists i/B_E[i](t_{N+1})\geq T_p$, dann ist das Paket des Eingangs n°*i* am Ausgang vorhanden und es gilt: $B_E[i](t_{N+1})=B_E[i](t_{N+1})-T_p$.

**5.** Multiplexierverfahren nach einem der vorhergehenden Ansprüche, **dadurch gekennzeichnet, dass**, wenn der Dienst des Eingangs *i* einen minimalen Durchsatz $D_{Emin}[i](t)$ und einen maximalen Durchsatz $D_{Emax}[i](t)$ hat, und wenn $B_{Emin}[i](t)$ und $B_{Emax}[i](t)$ das minimale bzw. maximale Füllen der Pufferzone des Eingangs *i* im Zeitpunkt *t* darstellen, wobei bekannt ist, dass dieses Füllen im Zeitpunkt *t*=0 Null ist und dass der Zeitpunkt $t_{N+1}=t_N+t_p$ mit $t_p=T_p/D_{Smax}$, das Füllen der Pufferzonen die folgenden Gleichungen erfüllt:
$\forall i \in [1, M] B_{Emin}[i](t_{N+1})=B_{Emin}[i](t_N)+D_{Emin}[i](t_{N+1})\cdot t_p$
und $B_{Emax}[i](t_{N+1})=B_{Emax}[i](t_N)+D_{Emax}[i](t_{N+1})\cdot t_p$
und die Datenübertragung am Ausgang die folgenden Gleichungen erfüllt:
gilt $\exists i/B_{Emin}[i](t_{N+1})\geq T_p$, dann ist das Paket des Eingangs n°*i* am Ausgang vorhanden, $B_{Emin}[i](t_{N+1})=B_{Emin}[i](t_{N+1})-T_p$ und $B_{Emax}[i](t_{N+1})=B_{Elin}[i](t_{N+1})$, gilt aber $\exists i/B_{Emax}[i](t_{N+1})\geq T_p$, dann ist das Paket des Eingangs n°*i* am Ausgang vorhanden, $B_{Emin}[i](t_{N+1})=B_{Emin}[i](t_{N+1})-T_p$, und $B_{Emax}[i](t_{N+1})=B_{Elax}[i](t_{N+1})-T_p$, während ansonsten ein Füllpaket am Ausgang präsentiert wird.

6. Multiplexierverfahren nach einem der vorhergehenden Ansprüche, **dadurch gekennzeichnet, dass** alle oder ein Teil der Dienste am Ausgang mit konstanten und/oder variablen Durchsätzen, mit oder ohne minimalem und/oder maximalem Sollwert präsentiert werden.

7. Multiplexer mit M Eingängen, wobei M eine ganze Zahl > 1 ist, und einem Ausgang, der es ermöglicht, Datenpakete einer vorbestimmten Größe $T_p$ mit Ausgangsdurchsatz zu übertragen, wobei der maximale Ausgangsdurchsatz $D_{Smax}$ vorbestimmt ist, **dadurch gekennzeichnet, dass** er M Pufferzonen (31) zum Speichern der von jedem der M Eingangsdienste eingehenden Daten aufweist, wobei jede Pufferzone (31) mit einem Eingang und einer Auswahlvorrichtung (32) verbunden ist, welche die Pufferzone (31), deren Füllung größer ist als die Größe $T_p$ eines Pakets, mit dem Ausgang verbindet, wodurch die Präsentation eines Pakets von Daten am Ausgang, die aus allen oder einem Teil der in der Pufferzone vorhandenen Daten bestehen, und die Ausgabe der Daten, die am Ausgang der Pufferzone vorhanden sind, ermöglicht wird.

8. Multiplexer nach Anspruch 7, **dadurch gekennzeichnet, dass** die Pufferzonen (31) und/oder die Auswahlvorrichtung (32) virtuell sind.

9. Multiplexer nach Anspruch 7, **dadurch gekennzeichnet, dass** er das Multiplexierverfahren nach einem der Ansprüche 2 bis 6 anwendet.

10. Digitale Sendekette von Diensten verschiedener Art auf verschiedenen Arten von synchronen und/oder asynchronen Datennetzen, die aufweist:

   - M Eingänge (1), deren Funktionen die Datenerfassung, die Umwandlung in Pakete von fester Größe sind, die an das Verteilungsprotokoll angepasst ist,
   - M Puffer (2), in denen die M Eingänge (1) die Pakete speichern,
   - einen Multiplexer (3) nach einem der Ansprüche 7 und 8, dessen M Eingänge mit den M Puffern (2) verbunden sind,
   - J Puffer (4), die mit den J Ausgängen des Multiplexers (3) verbunden sind und es ermöglichen, die synchronen und asynchronen Daten zu verarbeiten,
   - J Ausgänge (5), deren Funktionen die Erfassung der Daten der J Puffer (4), die Anpassung an das Format des Übertragungskanals und die Verteilung sind.

11. System zur Verteilung von Diensten verschiedener Art auf verschiedene Arten von synchronen und/oder asynchronen Datennetzen, das in seiner Sendekette den Multiplexer nach einem der Ansprüche 7 und 8 aufweist.

**Claims**

1. Process for multiplexing M services, M integer > 1, making it possible to transmit data packets of predetermined size $T_p$ with an output bit rate whose maximum output bit rate $D_{smax}$ is predetermined, **characterized in that** it comprises the storage of the incoming data of each service in an associated buffer area, the presentation at output of a packet of data formed by all or part of the data present in the buffer area whose fill is greater than or equal to the size $T_p$ of a packet and the removal of the data presented at output from said buffer area.

2. Multiplexing process according to Claim 1, **characterized in that** if no buffer area has a fill greater than or equal to the size $T_p$ of a packet, a padding packet is presented at output.

3. Multiplexing process according to one of the preceding claims, **characterized in that** if several buffer areas exhibit a fill greater than or equal to the size $T_p$ of a packet, the buffer area from which at least part of its data will be extracted first depends either on its priority, or on the priority of the service stored, or on the type of data stored.

4. Multiplexing process according to one of the preceding claims, **characterized in that** the fill of the buffer areas satisfies the following equation: $\forall i \in [1,M]$ $B_E[i](t_{N+1}) = B_E[i](t_N) + D_E[i](t_{N+1}) \cdot t_p$ where $B_E[i](t)$ represents the fill of the buffer area of input i at the instant t, $D_E[i](t)$ represents the bit rate of the data for input i at the instant t, the instant $t_{N+1} = t_N + t_p$ with $t_p = T_p/D_{Smax}$ and knowing that at the instant t=0, the M buffer areas are empty and **in that** the transmission of the data at output satisfies the following equation: if $\exists i/B_E[i](t_{N+1}) \geq T_p$, then the packet of input No.i is presented at output and $B_E[i](t_{N+1})=B_E[i](t_{N+1})-T_p$.

5. Multiplexing process according to one of the preceding claims, **characterized in that** if the service of input i at a minimum bit rate $D_{Emin}[i](t)$ and a maximum bit rate $D_{Emax}[i](t)$, and if $B_{Emin}[i](t)$ and $B_{Emax}[i](t)$ represent respectively the minimum and maximum fill of the buffer area of input i at the instant t knowing that this fill is zero at the instant t=0 and that the instant $t_{N+1}=t_N+t_p$ with $t_p=T_p/D_{smax}$, the fill of the buffer areas satisfies the following equations:

$$\forall i \in [1,M] B_{Emin}[i](t_{N+1})=B_{Emin}[i](t_N)+D_{Emin}[i](t_{N+1}) \cdot t_p$$

$$\text{and } B_{Emax}[i](t_{N+1})=B_{Emax}[i](t_N)+D_{Emax}[i](t_{N+1}) \cdot t_p$$

and the transmission of data at output satisfies the following equations:
if $\exists i/B_{Emin}[i](t_{N+1}) \geq T_p$, then the packet of input No.i is presented at output, $B_{Emin}[i](t_N)=B_{Emin}[i](t_{N+1})-T_p$ and $B_{Emax}[i](t_{N+1})=B_{Elin}[i](t_{N+1})$ else if $\exists i/B_{Emax}[i](t_{N+1}) \geq T_p$, then the packet of input No.i is presented at output, $B_{Emin}[i](t_{N+1})=B_{Emin}[i](t_{N+1})-T_p$ and $B_{Emax}[i](t_{N+1})=B_{Ela}[i](t_{N+1})-T_p$, else a padding packet is presented at output.

6. Multiplexing process according to one of the preceding claims, **characterized in that** all or part of the services are presented at output with constant and/or variable bit rates with or without minimum and/or maximum set-point.

7. Multiplexer with M inputs, M integer > 1, and an output making it possible to transmit data packets of predetermined size $T_p$ with output bit rate whose maximum output bit rate $D_{Smax}$ is predetermined, **characterized in that** it comprises M buffer areas (31) for storing the incoming data of each of the M incoming services, each buffer area (31) being connected to an input and an election device (32) connecting the buffer area (31) whose fill is greater than the size $T_p$ of a packet to the output, thus allowing the presentation at output of a packet of data formed by all or some of the data present in the said buffer area and the removal of the data presented at output from said buffer area.

8. Multiplexer according to Claim 7, **characterized in that** the buffer areas (31) and/or the election device (32) are virtual.

9. Multiplexer according to Claim 7, **characterized in that** it implements the multiplexing process according to one of Claims 2 to 6.

10. Digital transmission chain for services of various types on diverse types of synchronous and/or asynchronous data networks comprising:

   - M inputs (1) whose functions are acquisition of the data, transformation into packets of fixed size tailored to the broadcasting protocol,
   - M buffers (2) in which the M inputs (1) will store the said packets,
   - a multiplexer (3) according to one of Claims 7 and 8 whose M inputs are connected to the M buffers (2),
   - J buffers (4) connected to the J outputs of the multiplexer (3) making it possible to manage the synchronous and asynchronous data,
   - J outputs (5) whose functions are acquisition of the data of the J buffers (4), tailoring to the format of the transmission channel and broadcasting.

11. System for broadcasting services of various types on diverse types of synchronous and/or asynchronous data networks comprising in its transmission chain the multiplexer according to one of Claims 7 and 8.

FIG.1

FIG.2

FIG.3

FIG.4

FIG.5